(19) Europäisches Patentamt
European Patent Office
Office européen des brevets

(11) **EP 3 785 347 B1**

(12) **FASCICULE DE BREVET EUROPEEN**

(45) Date de publication et mention
de la délivrance du brevet:
**23.03.2022  Bulletin 2022/12**

(21) Numéro de dépôt: **19720965.3**

(22) Date de dépôt: **03.04.2019**

(51) Classification Internationale des Brevets (IPC):
**H02J 7/00** *(2006.01)*    **B60R 16/03** *(2006.01)*

(52) Classification Coopérative des Brevets (CPC):
**H02J 7/342; H02J 7/00711;** H02J 2310/48

(86) Numéro de dépôt international:
**PCT/FR2019/050776**

(87) Numéro de publication internationale:
**WO 2019/207226 (31.10.2019 Gazette 2019/44)**

(54) **DISPOSITIF D'ALIMENTATION D'UNE MACHINE ÉLECTRIQUE DE VÉHICULE AUTOMOBILE**

VORRICHTUNG ZUR SPEISUNG EINER ELEKTRISCHEN MASCHINE EINES KRAFTFAHRZEUGS

DEVICE FOR POWERING AN ELECTRICAL MACHINE OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.04.2018   FR 1853741**

(43) Date de publication de la demande:
**03.03.2021   Bulletin 2021/09**

(73) Titulaire: **VALEO EQUIPEMENTS ELECTRIQUES MOTEUR**
**94046 Créteil Cedex (FR)**

(72) Inventeur: **LABBE, Nicolas**
**38070 St Quentin Fallavier (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
WO-A1-99/14837        FR-A1- 2 996 374
US-A1- 2014 340 022

**Description**

La présente invention porte sur un dispositif d'alimentation d'une machine électrique de véhicule automobile.

De façon connue en soi, un réseau de distribution électrique de véhicule automobile comporte généralement une batterie reliée au réseau de bord du véhicule pour alimenter en électricité les équipements du véhicule. Un alternateur transforme une partie de l'énergie mécanique du moteur thermique en énergie électrique pour recharger la batterie.

Parmi les équipements du réseau de bord, on trouve d'une part des composants de faible puissance et d'autre part au moins un composant de forte puissance. Un tel composant de forte puissance peut être un démarreur ou encore un moteur électrique de traction. Un exemple d'un tel réseau de bord peut être trouvé dans le document FR 2996374.

Le problème avec ce type de réseau de distribution d'énergie réside dans le fait que lors des phases transitoires d'activation, l'alimentation du composant de forte puissance provoque un appel de courant très élevé, en particulier au regard du niveau atteint par la suite quand le moteur tourne et fonctionne à son régime nominal, avec sa force électromotrice ou "tension induite de rotation", qui s'oppose à l'appel de courant. Aussi, une importante chute de tension se développe au niveau de la batterie. Du fait de cette chute de tension, les autres composants, comportant souvent une électronique de commande nécessitant un niveau de tension suffisamment élevé, peuvent ne plus être alimentés avec une tension suffisante pour leur bon fonctionnement. En outre, les appels de courant élevés à répétition ont tendance à réduire la durée de vie de la batterie.

Un autre problème avec ce type de réseau de distribution réside dans le fait que la batterie doit être conçue pour permettre d'offrir à la fois une bonne densité d'énergie pour fournir un faible courant de quelques ampères aux petits consommateurs pendant plusieurs heures, et une bonne densité de puissance pour fournir un fort courant de plusieurs centaines d'ampères aux gros consommateurs pendant quelques dizaines de secondes voire quelques minutes, y compris à basse température comme -25 °C par exemple, ce qui est incompatible et nécessite de faire un compromis, en particulier sur le nombre de plaques d'éléments de batterie en contact avec l'électrolyte, leur surface et leur épaisseur, pour un encombrement total limité. Les batteries au plomb ont été retenues pour répondre à ce compromis mais elles ont l'inconvénient d'avoir une masse élevée, pour une caractéristique de performance qui ne peut être ni maximale en densité d'énergie, ni maximale en densité de puissance.

L'invention vise à remédier efficacement, au moins en partie, à ces inconvénients en proposant un dispositif d'alimentation d'une machine électrique tournante de véhicule automobile comportant:

- une première unité de stockage d'énergie électrique, notamment destinée à alimenter un réseau de bord du véhicule automobile,
- une deuxième unité de stockage d'énergie électrique, notamment destinée à alimenter la machine électrique tournante,
- un amplificateur apte à être alimenté électriquement par la première unité de stockage d'énergie électrique et apte à alimenter électriquement la deuxième unité de stockage d'énergie électrique,
  caractérisé en ce que l'amplificateur comporte un circuit oscillant (16), le circuit oscillant comportant une capacitance de valeur C' et un ensemble inductif comportant une inductance de valeur L' et une résistance de valeur R',
- le circuit oscillant ayant une pulsation propre $\omega$ telle que $\omega = 1/\sqrt{(L' \times C')}$ et une fréquence propre f telle que $f = \omega/(2\pi)$, et en ce que la valeur de l'inductance est variable de manière prédéterminée, notamment de manière à faire croître un courant électrique fourni par la première unité de stockage d'énergie électrique au circuit oscillant en un courant amplifié fourni par le circuit oscillant à la deuxième unité de stockage d'énergie électrique.

L'invention permet ainsi, du fait de l'utilisation de l'amplificateur, alimenté par la première unité de stockage d'énergie électrique et destiné à la charge de la deuxième unité de stockage d'énergie électrique, d'éviter tout appel de courant important au niveau de la première unité de stockage d'énergie électrique. L'invention permet en outre, par l'utilisation de deux unités de stockage d'énergie électrique de type différent et situés sur deux circuits séparés, de se libérer du compromis lié à la conception de la batterie d'un véhicule automobile conduisant à ne pouvoir disposer ni d'une densité maximale d'énergie, ni d'une densité maximale de puissance.

Selon une réalisation, la valeur d'inductance L' varie selon une fréquence prédéterminée et selon une amplitude de variation d'inductance prédéterminée autour d'une valeur moyenne Lmoy, de sorte que le carré de la pulsation propre varie selon une amplitude de variation de pulsation prédéterminée autour d'une valeur moyenne égale à $(\omega moy)^2$, avec $\omega moy = 1/\sqrt{(Lmoy \times C')}$.

Selon une réalisation, la fréquence prédéterminée est choisie de sorte à faire croître l'amplitude du courant électrique circulant dans le circuit oscillant de manière exponentielle.

Selon une réalisation, la fréquence prédéterminée est égale à une fréquence propre moyenne du circuit oscillant à une tolérance $\varepsilon$ près, la fréquence propre moyenne fmoy étant égale à $\omega moy/(2\pi)$.

Selon une réalisation, la tolérance $\varepsilon$ est telle que $\varepsilon = \sqrt{((1/2) \times h \times \omega moy)^2 - (R'/L')^2)}$, l'amplitude de variation de pulsation prédéterminée étant égale à $h \times (\omega moy)^2$ et h étant un nombre dont la valeur absolue est inférieure strictement à 1.

Selon une réalisation, h est supérieur strictement à zéro.

Selon une réalisation, l'amplitude de variation de pulsation prédéterminée est supérieure strictement à $2 \times (R'/L') \times \sqrt{(L' \times C')}$.

Selon une réalisation, la capacitance présente une valeur de capacité constante.

Selon une réalisation, la première unité de stockage d'énergie électrique est du type batterie apte à fournir une faible intensité pendant une longue durée, par exemple 100 Ah, et en ce que la deuxième unité de stockage d'énergie électrique est du type supercondensateur apte à fournir une grande intensité pendant une plus courte durée, ou une batterie de caractéristiques dynamiques proches de celles d'un supercondensateur.

Selon une réalisation, les première et deuxième unités de stockage d'énergie électrique sont distinctes.

Selon une réalisation, la première unité de stockage d'énergie électrique présente une densité d'énergie, exprimée en Wh/kg, supérieure à celle de la deuxième unité de stockage d'énergie électrique, par exemple supérieure à 2 fois celle de la deuxième unité de stockage d'énergie électrique, notamment supérieure à 10 fois celle de la deuxième unité de stockage d'énergie électrique.

Selon une réalisation, la deuxième unité de stockage d'énergie électrique présente une densité de puissance, exprimée en W/kg, supérieure à celle de la première unité de stockage d'énergie électrique, par exemple supérieure à 2 fois celle de la première unité de stockage d'énergie électrique, notamment supérieure à 10 fois celle de la première unité de stockage d'énergie électrique.

Selon une réalisation, l'inductance est formée par un ensemble à réluctance inductive variable comportant :

- un stator comportant une pluralité de pôles formés par une pluralité de bobines disposées chacune autour d'une pièce polaire correspondante, et
- un rotor formé par un paquet de tôles magnétiques muni de saillances de même nombre que les pôles du stator.

Selon une réalisation, les bobines sont connectées en série les unes avec les autres.

Selon une réalisation, les bobines de deux pôles adjacents sont bobinées en sens inverse l'un de l'autre en sorte qu'il existe une alternance de pôles nord et de pôles sud suivant une circonférence du stator.

Selon une réalisation, l'amplificateur comporte un moteur électrique comportant un arbre accouplé au rotor pour entraîner en rotation le rotor de l'ensemble à réluctance inductive variable.

L'invention sera mieux comprise à la lecture de la description qui suit et à l'examen des figures qui l'accompagnent. Ces figures ne sont données qu'à titre illustratif mais nullement limitatif de l'invention.

La figure 1a est une représentation schématique illustrant un dispositif d'alimentation selon l'invention alimentant un démarreur de moteur thermique ;

La figure 1b est une représentation graphique de l'évolution, en fonction du temps, du courant dans le circuit oscillant, du courant fourni par la supercapacité, et du courant circulant dans le moteur de pompage lors de l'activation du dispositif d'alimentation de la figure 1a;

La figure 2a est une représentation schématique illustrant un dispositif d'alimentation selon l'invention alimentant une machine électrique de traction de véhicule automobile ;

La figure 2b est une représentation graphique de l'évolution, en fonction du temps, du courant dans le circuit oscillant, du courant fourni par la supercapacité, et du courant circulant dans le moteur de pompage lors de l'activation du dispositif d'alimentation de la figure 2a;

La figure 3 est une représentation schématique d'une inductance, sous la forme d'un ensemble à réluctance inductive variable, utilisé dans le dispositif d'alimentation selon la présente invention.

Les éléments identiques, similaires, ou analogues conservent les mêmes références d'une figure à l'autre.

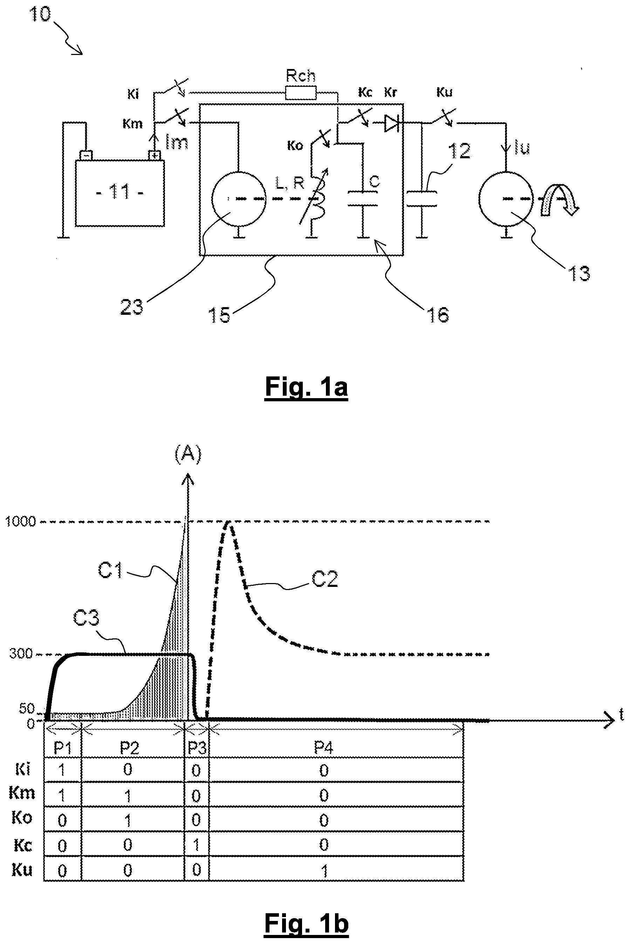

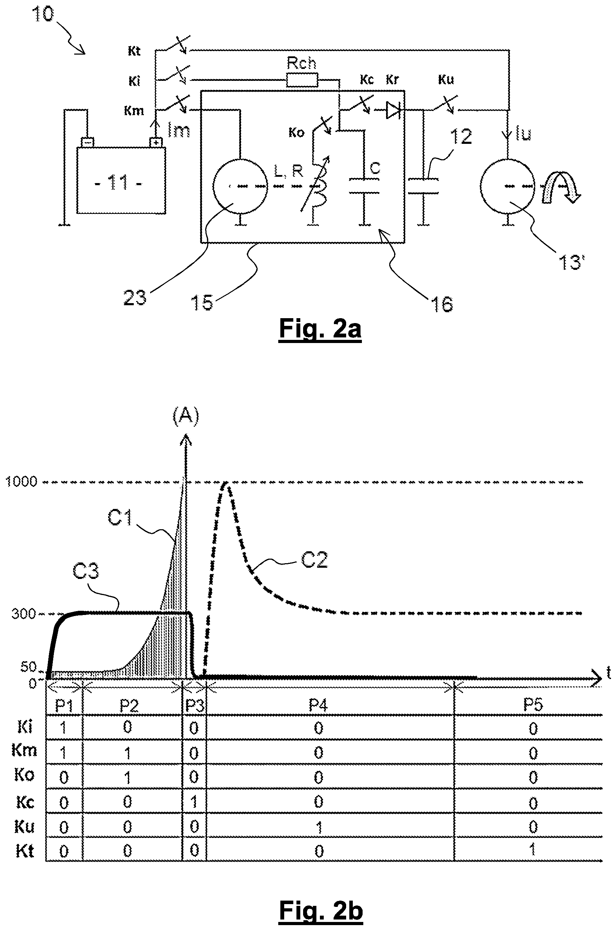

Les figures 1a et 2a montrent un dispositif d'alimentation 10 selon l'invention comportant une première unité de stockage d'énergie électrique 11 destinée à alimenter en électricité les consommateurs électriques d'un réseau de bord de véhicule automobile.

Une deuxième unité de stockage d'énergie électrique 12 est destinée à alimenter un composant de forte puissance 13, 13' qui peut prendre la forme d'un démarreur (cf. figure 1a) ou d'un moteur électrique de traction (cf. figure 1b).

La première unité de stockage d'énergie 11 est du type batterie apte à fournir une faible intensité pendant une longue durée, par exemple 100 Ah; tandis que la deuxième unité de stockage d'énergie 12 est du type supercondensateur apte à fournir une grande intensité pendant une plus courte durée, par exemple une intensité de l'ordre de 800 à 1000A pendant une durée inférieure à 50 ms, ou une batterie de caractéristiques dynamiques proches de celles d'un supercondensateur. Les unités de stockage 11 et 12 sont avantageusement distinctes. En variante, les unités de stockage 11 et 12 pourront être intégrées au sein d'un même boitier.

La première unité de stockage d'énergie 11 et la deuxième unité de stockage d'énergie 12 pourront être appelées plus simplement respectivement "batterie" et "supercondensateur" dans la suite de la description.

Avantageusement, la batterie 11 présente une densité d'énergie, exprimée en Wh/kg, supérieure à celle du supercondensateur 12, par exemple supérieure à 2 fois celle du supercondensateur 12, notamment supérieure à 10 fois celle du supercondensateur 12.

Le supercondensateur 12 présente une densité de puissance, exprimée en W/kg, supérieure à celle de la batterie 11, par exemple supérieure à 2 fois celle de la batterie 11, notamment supérieure à 10 fois celle de la batterie 11.

Un amplificateur 15 est interposé entre la batterie 11 et le supercondensateur 12. L'amplificateur 15 est alimenté électriquement par la batterie 11 et alimente électriquement le supercondensateur 12.

L'amplificateur 15 comporte un circuit oscillant 16 formé par une capacitance C de valeur C' et un ensemble inductif comportant une inductance L de valeur L' et une résistance R de valeur R. La résistance R pourra en partie appartenir à la capacitance C en plus de l'ensemble inductif.

Le circuit oscillant 16 a une pulsation propre $\omega$ telle que $\omega = 1/\sqrt{(L' \times C')}$ et une fréquence propre f telle que f $= \omega/(2\pi)$.

Avantageusement, la capacitance C présente une valeur de capacité constante tandis que la valeur de l'inductance L est variable de manière prédéterminée, notamment de manière à faire croître un courant électrique fourni par la batterie 11 au circuit oscillant 16 en un courant amplifié fourni par le circuit oscillant 16 au supercondensateur 12.

La valeur L' de l'inductance L varie selon une fréquence prédéterminée et selon une amplitude de variation d'inductance prédéterminée autour d'une valeur moyenne Lmoy, de sorte que le carré de la pulsation propre varie selon une amplitude de variation de pulsation prédéterminée autour d'une valeur moyenne égale à $(\omega moy)^2$, avec $\omega moy = 1/\sqrt{(Lmoy \times C')}$. La fréquence prédéterminée est choisie de sorte à faire croître l'amplitude du courant électrique circulant dans le circuit oscillant 16 de manière exponentielle.

La fréquence prédéterminée est avantageusement égale à deux fois la fréquence propre moyenne du circuit oscillant 16 à une tolérance $\varepsilon$ près, la fréquence propre moyenne étant égale à $\omega moy/(2\pi)$.

L'amplitude de variation de pulsation prédéterminée est égale à $h \times (\omega moy)^2$, h étant un nombre strictement supérieur à zéro et inférieur strictement à 1.

$$\text{La tolérance } \varepsilon \text{ étant telle que } \varepsilon = \sqrt{(((1/2) \times h \times \omega moy)^2 - (R'/L')^2)}.$$

L'amplitude de variation de pulsation prédéterminée est supérieure strictement à $2 \times (R'/L') \times \sqrt{(L' \times C')}$.

L'amplificateur 15 comporte en outre une diode Kr pour délivrer un courant unidirectionnel au supercondensateur 12.

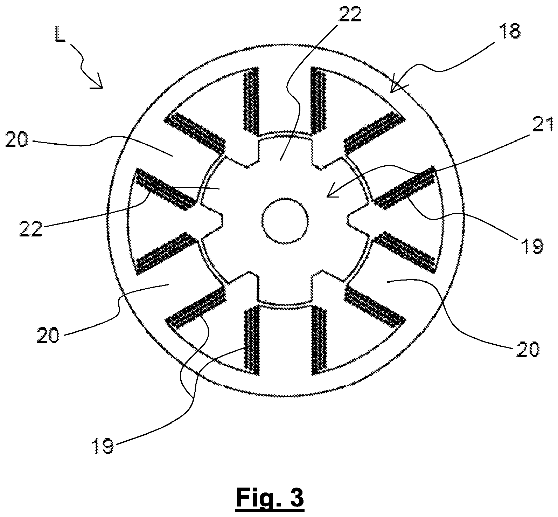

Comme on peut le voir sur la figure 3, l'inductance L est avantageusement formée par un ensemble à réluctance inductive variable comportant un stator 18 comprenant une pluralité de pôles formés par une pluralité de bobines 19 disposées chacune autour d'une pièce polaire 20 correspondante. Le stator 18 entoure coaxialement un rotor 21 formé par un paquet de tôles magnétiques muni de saillances 22 de même nombre que les pôles du stator 18. Dans l'exemple de la figure 3, le stator comporte 6 saillances alternées nord-sud. L'ensemble à réluctance inductive variable comporte ainsi 3 paires de pôles tant au rotor qu'au stator.

Les bobines 19 sont avantageusement connectées en série les unes avec les autres.

Les bobines 19 de deux pôles adjacents sont bobinées en sens inverse l'un de l'autre, en sorte qu'il existe une alternance de pôles nord N et de pôles sud S suivant une circonférence du stator 18.

Un moteur de pompage 23 entraîne en rotation le rotor 21. Ce moteur de pompage 23 est par exemple un moteur électrique de type servomoteur à vitesse constante. A cet effet, le moteur de pompage 23 comporte un arbre accouplé au rotor 21 pour entrainer en rotation le rotor 21 de l'ensemble à réluctance inductive variable. Le moteur de pompage 23 est alimenté électriquement par la batterie 11. La vitesse de rotation du moteur de pompage 23 est asservie afin de produire la fréquence prédéterminée recherchée. Cette vitesse de rotation sera par exemple, en régime établi, de l'ordre de 40 000 tours par minute.

La capacitance C du circuit oscillant 16 est par exemple un condensateur réalisé à base de polypropylène, notamment d'au moins 5 mF.

L'ensemble à réluctance inductive variable est par exemple dimensionné pour que la valeur d'inductance moyenne Lmoy soit de 5 $\mu$H.

Ainsi, la fréquence propre du circuit oscillant 16 sera de l'ordre de 1 kHz.

Une telle vitesse de rotation de 40 000 tours par minute permet, avec trois paires de pôles, de réaliser une fréquence de variation de la valeur de l'inductance L' d'environ 2 kHz, c'est-à-dire de deux fois la fréquence propre du circuit oscillant.

Le dispositif d'alimentation 10 comporte également une pluralité d'interrupteurs Ki, Km, Ko, Kc, Kr, Ku. Ces interrupteurs pourront prendre la forme de commutateur électronique à base de transistors.

L'interrupteur Ki commande la mise sous tension du condensateur C du circuit oscillant 16.

L'interrupteur Km commande la mise sous tension du moteur de pompage 23.

L'interrupteur Ko commande la mise en fonctionnement du circuit oscillant 16.

L'interrupteur Kc commande le transfert d'énergie du circuit oscillant 16 vers le supercondensateur 12 via un pont redresseur représenté par l'interrupteur Kr.

L'interrupteur Ku commande le transfert d'énergie du supercondensateur 12 vers le démarreur 13 de moteur thermique.

Les figures 1b et 2b décrivent l'évolution, en fonction du temps, des courants en Ampères (A) observables dans le circuit lors de l'activation du dispositif d'alimentation 10 selon l'invention.

La courbe C1 représente l'évolution temporelle de la valeur absolue du courant du circuit oscillant 16. La courbe C2 représente l'évolution temporelle du courant Iu fourni par la supercapacité 12 à la charge 13, 13'. La courbe C3 représente l'évolution temporelle du courant Im circulant dans le moteur de pompage 23.

Sous ces courbes, un tableau représente différentes phases de fonctionnement (P1 à P4 pour la figure 1b et P1 à P5 pour la figure 2b). Ces phases de fonctionnement sont en relation avec la courbe au sens où l'on a représenté chaque phase successivement dans le temps, le long de l'axe des abscisses. Les états "0" et "1" correspondent respectivement à un état ouvert et fermé des interrupteurs.

Lors d'une première phase P1, l'interrupteur Ki est fermé afin de charger le condensateur C du circuit oscillant 16 avec un courant faible de l'ordre de 50A via une résistance Rch. En outre, le moteur de pompage 23 est mis en fonctionnement pour atteindre la vitesse, supérieure à 10000 tours/min, adaptée à l'activation du circuit oscillant 16 (cf. fermeture de Km). Cette phase P1 a une durée comprise entre 50ms et 100 ms.

Lors de la deuxième phase P2, la fermeture de Ko engendre une croissance des oscillations à l'intérieur du circuit oscillant 16 du fait de la variation de la valeur de l'inductance L de la façon précitée. Le moteur de pompage 23 permet également de vaincre le couple résistant de l'ensemble à réluctance inductive variable lié au courant d'amplitude croissante du circuit oscillant 16 circulant dans les bobines 19 du stator 18. Le courant Im circulant dans le moteur de pompage 23 est d'environ 300A. La phase P2 a une durée comprise entre 100ms et 200ms.

Lors de la troisième phase P3, l'interrupteur Kc est fermé pour transférer l'énergie accumulée dans le circuit oscillant 16 vers le supercondensateur 12. Cette phase P3 a une durée comprise entre 50 ms et 100 ms.

Lors de la phase P4, la fermeture de l'interrupteur Ku permet l'alimentation du démarreur 13 par le supercondensateur 12. On observe alors un pic de courant correspondant à l'appel de courant du démarreur pouvant atteindre 1000A. L'amplificateur 15 selon l'invention permet ainsi de dissocier le circuit électrique de la batterie 11 par rapport au circuit électrique du démarreur 13 pour éviter que l'appel de courant du démarreur 13 vienne perturber les autres charges du réseau de bord connectées à la batterie 11. Cette phase P4 a une durée comprise entre 500ms et 1s.

Après que le moteur thermique a atteint son régime d'autonomie, l'interrupteur Ku est ouvert.

La figure 2a montre une variante de réalisation de l'invention suivant laquelle le dispositif d'alimentation 10 alimente une machine électrique 13' prenant la forme d'un moteur de traction. Les composants de l'amplificateur 15 ainsi que son fonctionnement sont analogues à ceux du dispositif des figures 1a et 1b.

La différence réside dans la durée d'activation du moteur de traction 13' qui est plus longue de celle du démarreur 13. En effet, un tel moteur 13' pourra rester sous tension plusieurs minutes, voire quelques heures. En conséquence, il sera possible de prévoir un interrupteur supplémentaire Kt permettant au moteur de traction 13' d'être alimenté par la batterie 11 après avoir été alimenté par le supercondensateur 12 lors de l'appel de courant initial (cf. phase P5 de la figure 2b).

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Dispositif (10) d'alimentation d'une machine électrique tournante (13, 13') de véhicule automobile comportant:

    - une première unité de stockage d'énergie électrique (11), notamment destinée à alimenter un réseau de bord du véhicule automobile,

- une deuxième unité de stockage d'énergie électrique (12), notamment destinée à alimenter la machine électrique tournante (13, 13'),
- un amplificateur (15) apte à être alimenté électriquement par la première unité de stockage d'énergie électrique (11) et apte à alimenter électriquement la deuxième unité de stockage d'énergie électrique (12), **caractérisé en ce que** l'amplificateur (15) comporte un circuit oscillant (16), le circuit oscillant (16) comportant une capacitance (C) de valeur C' et un ensemble inductif comportant une inductance (L) de valeur L' et une résistance (R) de valeur R',
- le circuit oscillant (16) ayant une pulsation propre $\omega$ telle que $\omega = 1/\sqrt{(L' \times C')}$ et une fréquence propre f telle que $f = \omega/(2\pi)$,

et **en ce que** la valeur de l'inductance (L) est variable de manière prédéterminée, notamment de manière à faire croître un courant électrique fourni par la première unité de stockage d'énergie électrique (11) au circuit oscillant (16) en un courant amplifié fourni par le circuit oscillant (16) à la deuxième unité de stockage d'énergie électrique (12).

2. Dispositif selon la revendication 1, **caractérisé en ce que** la valeur d'inductance L' varie selon une fréquence prédéterminée et selon une amplitude de variation d'inductance prédéterminée autour d'une valeur moyenne Lmoy, de sorte que le carré de la pulsation propre varie selon une amplitude de variation de pulsation prédéterminée autour d'une valeur moyenne égale à $(\omega moy)^2$, avec $\omega moy = 1/\sqrt{(Lmoy \times C')}$.

3. Dispositif selon la revendication 2, **caractérisé en ce que** la fréquence prédéterminée est choisie de sorte à faire croître l'amplitude du courant électrique circulant dans le circuit oscillant (16) de manière exponentielle.

4. Dispositif selon la revendication 2 ou 3, **caractérisé en ce que** la fréquence prédéterminée est égale à deux fois une fréquence propre moyenne du circuit oscillant (16) à une tolérance $\varepsilon$ près, la fréquence propre moyenne fmoy étant égale à $\omega moy/(2\pi)$.

5. Dispositif selon la revendication 4, **caractérisé en ce que** la tolérance $\varepsilon$ est telle que $\varepsilon = \sqrt{(((1/2) \times h \times \omega moy)^2 - (R'/L')^2)}$, l'amplitude de variation de pulsation prédéterminée étant égale à $h \times (\omega moy)^2$ et h étant un nombre dont la valeur absolue est inférieure strictement à 1.

6. Dispositif selon l'une quelconque des revendications 2 à 5, **caractérisé en ce que** l'amplitude de variation de pulsation prédéterminée est supérieure strictement à $2 \times (R'/L') \times \sqrt{(L' \times C')}$.

7. Dispositif selon l'une quelconque des revendications 1 à 6, **caractérisé en ce que** la capacitance (C) présente une valeur de capacité constante.

8. Dispositif selon l'une quelconque des revendications 1 à 7, **caractérisé en ce que** la première unité de stockage d'énergie électrique (11) est du type batterie apte à fournir une faible intensité pendant une longue durée, par exemple 100 Ah, et **en ce que** la deuxième unité de stockage d'énergie électrique (12) est du type supercondensateur apte à fournir une grande intensité pendant une plus courte durée, ou une batterie de caractéristiques dynamiques proches de celles d'un supercondensateur.

9. Dispositif selon l'une quelconque des revendications 1 à 8, **caractérisé en ce que** les première et deuxième unités de stockage d'énergie électrique (11, 12) sont distinctes.

10. Dispositif selon l'une quelconque des revendications 1 à 9, **caractérisé en ce que** la première unité de stockage d'énergie électrique (11) présente une densité d'énergie, exprimée en Wh/kg, supérieure à celle de la deuxième unité de stockage d'énergie électrique (12), par exemple supérieure à 2 fois celle de la deuxième unité de stockage d'énergie électrique (12), notamment supérieure à 10 fois celle de la deuxième unité de stockage d'énergie électrique (12).

11. Dispositif selon l'une quelconque des revendications 1 à 10, **caractérisé en ce que** la deuxième unité de stockage d'énergie électrique (12) présente une densité de puissance, exprimée en W/kg, supérieure à celle de la première unité de stockage d'énergie électrique (11), par exemple supérieure à 2 fois celle de la première unité de stockage d'énergie électrique (11), notamment supérieure à 10 fois celle de la première unité de stockage d'énergie électrique (11).

12. Dispositif selon l'une quelconque des revendications 1 à 11, **caractérisé en ce que** l'inductance (L) est formée par un ensemble à réluctance inductive variable comportant :

- un stator (18) comportant une pluralité de pôles formés par une pluralité de bobines (19) disposées chacune autour d'une pièce polaire (20) correspondante, et
- un rotor (21) formé par un paquet de tôles magnétiques muni de saillances de même nombre que les pôles du stator (18).

13. Dispositif selon la revendication 12, **caractérisé en ce que** les bobines (19) sont connectées en série les unes avec les autres.

14. Dispositif selon la revendication 12 ou 13, **caractérisé en ce que** les bobines (19) de deux pôles adjacents sont bobinées en sens inverse l'un de l'autre en sorte qu'il existe une alternance de pôles nord et de pôles sud suivant une circonférence du stator (18).

15. Dispositif selon l'une quelconque des revendications 12 à 14, **caractérisé en ce que** l'amplificateur (15) comporte un moteur électrique comportant un arbre accouplé au rotor (21) pour entraîner en rotation le rotor (21) de l'ensemble à réluctance inductive variable.

## Patentansprüche

1. Vorrichtung (10) zur Versorgung einer rotierenden elektrischen Maschine (13, 13') eines Kraftfahrzeugs, die aufweist:

   - eine erste Speichereinheit elektrischer Energie (11), die insbesondere dazu bestimmt ist, ein Bordnetz des Kraftfahrzeugs zu versorgen,
   - eine zweite Speichereinheit elektrischer Energie (12), die insbesondere dazu bestimmt ist, die rotierende elektrische Maschine (13, 13') zu versorgen,
   - einen Verstärker (15), der fähig ist, von der ersten Speichereinheit elektrischer Energie (11) mit Strom versorgt zu werden und der fähig ist, die zweite Speichereinheit elektrischer Energie (12) mit Strom zu versorgen,

   **dadurch gekennzeichnet, dass** der Verstärker (15) einen Schwingkreis (16) aufweist, wobei der Schwingkreis (16) eine Kapazität (C) des Werts C' und eine induktive Einheit aufweist, die eine Induktivität (L) des Werts L' und einen Widerstand (R) des Werts R' aufweist,

   - wobei der Schwingkreis (16) eine Eigenkreisfrequenz $\omega$ derart, dass gilt $\omega = 1/\sqrt{(L' \times C')}$, und eine Eigenfrequenz f derart hat, dass gilt $f = \omega/(2\pi)$,

   und dass der Wert der Induktivität (L) in vorbestimmter Weise variabel ist, insbesondere um einen von der ersten Speichereinheit elektrischer Energie (11) an den Schwingkreis (16) gelieferten elektrischen Strom zu einem vom Schwingkreis (16) an die zweite Speichereinheit elektrischer Energie (12) gelieferten verstärkten Strom ansteigen zu lassen.

2. Vorrichtung nach Anspruch 1, **dadurch gekennzeichnet, dass** der Induktivitätswert L' sich gemäß einer vorbestimmten Frequenz und gemäß einer vorbestimmten Induktivitätsänderungsamplitude um einen Mittelwert Lmoy herum ändert, so dass das Quadrat der Eigenkreisfrequenz sich gemäß einer vorbestimmten Kreisfrequenzänderungsamplitude um einen Mittelwert gleich $(\omega moy)^2$ herum ändert, mit $\omega moy = 1/\sqrt{(Lmoy \times C')}$.

3. Vorrichtung nach Anspruch 2, **dadurch gekennzeichnet, dass** die vorbestimmte Frequenz gewählt wird, um die Amplitude des im Schwingkreis (16) fließenden elektrischen Stroms exponentiell ansteigen zu lassen.

4. Vorrichtung nach Anspruch 2 oder 3, **dadurch gekennzeichnet, dass** die vorbestimmte Frequenz bis auf einen Toleranzwert $\varepsilon$ gleich dem Doppelten einer mittleren Eigenfrequenz des Schwingkreises (16) ist, wobei die mittlere Eigenfrequenz fmoy gleich $\omega moy/(2\pi)$ ist.

5. Vorrichtung nach Anspruch 4, **dadurch gekennzeichnet, dass** die Toleranz $\varepsilon$ derart ist, dass gilt $\varepsilon = \sqrt{((1/2) \times h \times \omega moy)^2 - (R'/L')^2}$, wobei die vorbestimmte Kreisfrequenzänderungsamplitude gleich $h \times (\omega moy)^2$ und h eine Zahl ist, deren Absolutwert strikt geringer als 1 ist.

**6.** Vorrichtung nach einem der Ansprüche 2 bis 5, **dadurch gekennzeichnet, dass** die vorbestimmte Kreisfrequenzänderungsamplitude strikt größer ist als 2x (R'/L') $\times$ $\sqrt{(L' \times C')}$.

**7.** Vorrichtung nach einem der Ansprüche 1 bis 6, **dadurch gekennzeichnet, dass** die Kapazität (C) einen konstanten Kapazitätswert aufweist.

**8.** Vorrichtung nach einem der Ansprüche 1 bis 7, **dadurch gekennzeichnet, dass** die erste Speichereinheit elektrischer Energie (11) von der Art Batterie ist, die fähig ist, während einer langen Dauer eine schwache Stromstärke zu liefern, zum Beispiel 100 Ah, und dass die zweite Speichereinheit elektrischer Energie (12) von der Art Superkondensator, der fähig ist, während einer kürzeren Dauer eine große Stromstärke zu liefern, oder eine Batterie mit dynamischen Eigenschaften nahe denjenigen eines Superkondensators ist.

**9.** Vorrichtung nach einem der Ansprüche 1 bis 8, **dadurch gekennzeichnet, dass** die erste und die zweite Speichereinheit elektrischer Energie (11, 12) unterschiedlich sind.

**10.** Vorrichtung nach einem der Ansprüche 1 bis 9, **dadurch gekennzeichnet, dass** die erste Speichereinheit elektrischer Energie (11) eine Energiedichte, ausgedrückt in Wh/kg, größer als diejenige der zweiten Speichereinheit elektrischer Energie (12) aufweist, zum Beispiel größer als das Doppelte derjenigen der zweiten Speichereinheit elektrischer Energie (12), insbesondere größer als das Zehnfache derjenigen der zweiten Speichereinheit elektrischer Energie (12).

**11.** Vorrichtung nach einem der Ansprüche 1 bis 10, **dadurch gekennzeichnet, dass** die zweite Speichereinheit elektrischer Energie (12) eine Leistungsdichte, ausgedrückt in W/kg, größer als diejenige der ersten Speichereinheit elektrischer Energie (11) aufweist, zum Beispiel größer als das Doppelte derjenigen der ersten Speichereinheit elektrischer Energie (11), insbesondere größer als das Zehnfache derjenigen der ersten Speichereinheit elektrischer Energie (11).

**12.** Vorrichtung nach einem der Ansprüche 1 bis 11, **dadurch gekennzeichnet, dass** die Induktivität (L) von einer Einheit mit variabler induktiver Reluktanz gebildet wird, die aufweist:

- einen Stator (18), der eine Vielzahl von Polen aufweist, die von einer Vielzahl von Spulen (19) gebildet werden, die je um ein entsprechendes Polstück (20) herum angeordnet sind, und
- einen Rotor (21), der von einem Paket von Magnetblechen gebildet wird, die mit Vorsprüngen in gleicher Anzahl wie die Pole des Stators (18) versehen sind.

**13.** Vorrichtung nach Anspruch 12, **dadurch gekennzeichnet, dass** die Spulen (19) in Reihe miteinander verbunden sind.

**14.** Vorrichtung nach Anspruch 12 oder 13, **dadurch gekennzeichnet, dass** die Spulen (19) von zwei benachbarten Polen zueinander entgegengesetzt gewickelt sind, damit es eine Wechselfolge von Nord-Polen und SüdPolen gemäß einem Umfang des Stators (18) gibt.

**15.** Vorrichtung nach einem der Ansprüche 12 bis 14, **dadurch gekennzeichnet, dass** der Verstärker (15) einen Elektromotor aufweist, der eine mit dem Rotor (21) gekoppelte Welle aufweist, um den Rotor (21) der Einheit mit variabler induktiver Reluktanz in Drehung zu versetzen.

**Claims**

**1.** Power supply device (10) for a rotary electric machine (13, 13') of a motor vehicle, comprising:

- a first electrical energy storage unit (11), in particular intended to supply power to an on-board network of the motor vehicle,
- a second electrical energy storage unit (12), in particular intended to supply power to the rotary electric machine (13, 13'),
- an amplifier (15) able to be supplied with electric power by the first electrical energy storage unit (11) and able to supply electric power to the second electrical energy storage unit (12),

**characterized in that** the amplifier (15) comprises an oscillating circuit (16), the oscillating circuit (16) comprising a capacitance (C) of value C' and an inductive assembly comprising an inductance (L) of value L' and a resistance (R) of value R',

- the oscillating circuit (16) having a natural angular frequency $\omega$ such that $\omega = 1/\sqrt{(L' \times C')}$ and a natural frequency f such that $f = \omega/(2\pi)$,

and **in that** the value of the inductance (L) is variable in a predetermined manner, in particular so as to increase an electric current delivered by the first electrical energy storage unit (11) to the oscillating circuit (16) so as to obtain an amplified current delivered by the oscillating circuit (16) to the second electrical energy storage unit (12).

2. Device according to Claim 1, **characterized in that** the inductance value L' varies with a predetermined frequency and with a predetermined amplitude of variation in inductance about a mean value Lmoy, such that the square of the natural angular frequency varies with a predetermined amplitude of variation in angular frequency about a mean value equal to $(\omega moy)^2$, with $\omega moy = 1/\sqrt{(Lmoy \times C')}$.

3. Device according to Claim 2, **characterized in that** the predetermined frequency is chosen so as to increase the amplitude of the electric current flowing through the oscillating circuit (16) exponentially.

4. Device according to Claim 2 or 3, **characterized in that** the predetermined frequency is equal to twice a mean natural frequency of the oscillating circuit (16) to within a tolerance $\varepsilon$, the mean natural frequency fmoy being equal to $\omega moy/(2\pi)$.

5. Device according to Claim 4, **characterized in that** the tolerance $\varepsilon$ is such that $\varepsilon = \sqrt{(((1/2) \times h \times \omega moy)^2 - (R'/L')^2)}$, the predetermined amplitude of variation in angular frequency being equal to $h \times (\omega moy)^2$ and h being a number the absolute value of which is strictly less than 1.

6. Device according to any one of Claims 2 to 5, **characterized in that** the predetermined amplitude of variation in angular frequency is strictly greater than $2 \times (R'/L') \times \sqrt{(L' \times C')}$.

7. Device according to any one of Claims 1 to 6, **characterized in that** the capacitance (C) has a constant capacitance value.

8. Device according to any one of Claims 1 to 7, **characterized in that** the first electrical energy storage unit (11) is of the type of a battery able to deliver a small current for a long period, for example 100 Ah, and **in that** the second electrical energy storage unit (12) is of the type of a supercapacitor able to supply a large current for a shorter period, or a battery with dynamic characteristics close to those of a supercapacitor.

9. Device according to any one of Claims 1 to 8, **characterized in that** the first and second electrical energy storage units (11, 12) are distinct.

10. Device according to any one of Claims 1 to 9, **characterized in that** the first electrical energy storage unit (11) has an energy density, expressed in Wh/kg, greater than that of the second electrical energy storage unit (12), for example greater than twice that of the second electrical energy storage unit (12), in particular greater than 10 times that of the second electrical energy storage unit (12).

11. Device according to any one of Claims 1 to 10, **characterized in that** the second electrical energy storage unit (12) has a power density, expressed in W/kg, greater than that of the first electrical energy storage unit (11), for example greater than twice that of the first electrical energy storage unit (11), in particular greater than 10 times that of the first electrical energy storage unit (11).

12. Device according to any one of Claims 1 to 11, **characterized in that** the inductance (L) is formed by an assembly with a variable inductive reluctance comprising:

- a stator (18) comprising a plurality of poles which are formed by a plurality of coils (19) which are each arranged around a corresponding polar part (20), and
- a rotor (21) formed by a bundle of magnetic sheets which is provided with the same number of protrusions as there are poles of the stator (18).

**13.** Device according to Claim 12, **characterized in that** the coils (19) are connected in series with one another.

**14.** Device according to Claim 12 or 13, **characterized in that** the coils (19) of two adjacent poles are wound in opposite directions to each other such that there is an alternation of north poles and south poles around the circumference of the stator (18).

**15.** Device according to any one of Claims 12 to 14, **characterized in that** the amplifier (15) comprises an electric motor comprising a shaft coupled to the rotor (21) so as to drive the rotation of the rotor (21) of the assembly with a variable inductive reluctance.

**Fig. 1a**

| | P1 | P2 | P3 | P4 |
|---|---|---|---|---|
| Ki | 1 | 0 | 0 | 0 |
| Km | 1 | 1 | 0 | 0 |
| Ko | 0 | 1 | 0 | 0 |
| Kc | 0 | 0 | 1 | 0 |
| Ku | 0 | 0 | 0 | 1 |

**Fig. 1b**

EP 3 785 347 B1

**Fig. 2a**

| | P1 | P2 | P3 | P4 | P5 |
|---|---|---|---|---|---|
| Ki | 1 | 0 | 0 | 0 | 0 |
| Km | 1 | 1 | 0 | 0 | 0 |
| Ko | 0 | 1 | 0 | 0 | 0 |
| Kc | 0 | 0 | 1 | 0 | 0 |
| Ku | 0 | 0 | 0 | 1 | 0 |
| Kt | 0 | 0 | 0 | 0 | 1 |

**Fig. 2b**

EP 3 785 347 B1

**Fig. 3**

13

**RÉFÉRENCES CITÉES DANS LA DESCRIPTION**

**Documents brevets cités dans la description**

- FR 2996374